# EUROPÄISCHE PATENTSCHRIFT

(11) **EP 4 305 314 B1**
(45) Veröffentlichungstag und Bekanntmachung des Hinweises auf die Patenterteilung: **09.12.2026**
(21) Anmeldenummer: 22709323.4
(22) Anmeldetag: 03.03.2022
(51) Int. Cl.: F04D 29/10, F04D 29/58, H02K 5/10, H02K 5/20, H02K 9/06, F04D 13/06, F04D 25/08, F04D 17/16, F04D 19/00

(54) **IMPELLER UND VERFAHREN ZUM BETREIBEN EINES IMPELLERS**
IMPELLER AND METHOD FOR OPERATING SAME
ROTOR ET PROCÉDÉ DE FONCTIONNEMENT D'UN ROTOR

(30) Priorität: 09.03.2021 EP 21161532
(43) Veröffentlichungstag der Anmeldung: 17.01.2024
(73) Patentinhaber: mdGroup Germany GmbH, 57072 Siegen (DE)
(72) Erfinder: SCHÜBELER, Daniel, 57072 Siegen (DE); MEERKÖTTER, Sven, 57072 Siegen (DE)
(74) Vertreter: GLAWE DELFS MOLL
(86) Internationale Anmeldenummer: PCT/EP2022/055395
(87) Internationale Veröffentlichungsnummer: WO 2022/189251

(56) Entgegenhaltungen:
- DE-C- 377 132
- FR-A1- 2 910 078
- US-A- 3 199 774

## Beschreibung

Die Erfindung betrifft ein Verfahren zum Betreiben eines Impellers. Der Impeller umfasst ein Impellergehäuse und ein im Impellergehäuse angeordnetes Motorgehäuse. Mit einem in dem Motorgehäuse angeordneten Motor wird ein Impellerrotor angetrieben, um einen Luftstrom entlang eines zwischen dem Impellergehäuse und dem Motorgehäuse eingeschlossenen Ringraums zu erzeugen. Die Erfindung betrifft außerdem einen zum Durchführen des Verfahrens geeigneten Impeller.

Der Impellerrotor ist über eine Motorwelle an den Motor angeschlossen. Da die Motorwelle sich aus dem Innenraum des Motorgehäuses nach außen erstreckt, kann der Innenraum des Motorgehäuses nicht hermetisch von der Umgebung getrennt werden. Wenn der Impeller unter widrigen Umgebungsbedingungen betrieben wird, besteht die Gefahr, dass durch einen Spalt zwischen der Motorwelle und dem Motorgehäuse Verunreinigungen wie Staub oder Flüssigkeiten in den Innenraum des Motorgehäuses eindringen können.

Wenn der Spalt zwischen dem Motorgehäuse und der Motorwelle durch einen in schleifendem Kontakt stehenden Wellendichtring abgedichtet wird, erhöht sich die Reibung. Außerdem wirken Wellendichtringe im Allgemeinen nur bis zu einer Drehzahl von etwa 25.000 U/min zuverlässig. Impeller können aber mit höheren Drehzahlen von beispielsweise 40.000 U/min betrieben werden.

Das Dokument FR 2 910 078 A1 betrifft einen Ventilator zur regulierten Abgabe von Sauerstoff in einem Beatmungsgerät. Der Ventilator fasst ein Spiralgehäuse, dessen Einlassöffnung mit einer Sauerstoffzufuhrleitung in Verbindung steht, ein unmittelbar stromabwärts der Einlassöffnung angeordnetes Flügelrad.

Das Dokument US 3 199 774 A beschreibt eine Mantelstromventilatorbaugruppe, um einen Luftstrom innerhalb eines Kanals bereitzustellen.

In dem Dokument DE 377 132 C wird ein elektrisch betriebener Luttenventilator mit in die Luttenleitung eingebautem Elektromotor vorgeschlagen. Die Kühlung des Elektromotors erfolgt durch einen Luftstrom, welcher an der Windschattenseite mit der Luttenleitung in Verbindung steht.

Der Erfindung liegt die Aufgabe zugrunde, einen Impeller und ein Verfahren zum Betreiben eines Impellers vorzustellen, mit denen das Risiko vermindert wird, dass im Betrieb des Impellers Verunreinigungen in den Innenraum des Motorgehäuses eindringen. Ausgehend vom genannten Stand der Technik wird die Aufgabe gelöst mit den Merkmalen der unabhängigen Ansprüche. Vorteilhafte Ausführungsformen sind in den Unteransprüchen angegeben.

Bei dem erfindungsgemäßen Verfahren wird ein Überdruck im Innenraum des Motorgehäuses angelegt, so dass durch einen zwischen der Motorwelle und dem Motorgehäuse angeordneten Dichtspalt hindurch ein Leckfluss erzeugt wird, der vom Innenraum des Motorgehäuses nach außen gerichtet ist.

Durch den von innen nach außen gerichteten Leckfluss in dem Dichtspalt wird einem Eindringen von Verunreinigungen in den Innenraum des Motorgehäuses entgegengewirkt. Der Impeller kann unter widrigen Umgebungsbedingungen betrieben werden, ohne dass der Motor durch Verunreinigungen im Innenraum des Motorgehäuses beeinträchtigt wird.

Die Motorwelle kann über mehrere Lager drehbar gegenüber dem Motorgehäuses gelagert sein. Eines der Lager (Hauptlager) ist bezogen auf die Axialrichtung zwischen dem Motor und dem mit der Motorwelle angetriebenen Impellerrotor angeordnet. Der Motor kann ein Elektromotor sein. Das Hauptlager kann zwischen den magnetischen Komponenten des Elektromotors und dem Impellerrotor angeordnet sein. Der Dichtspalt ist zwischen dem Hauptlager und dem Impellerrotor angeordnet.

Das Verfahren kann so durchgeführt werden, dass der Dichtspalt zwischen der Außenschale des Hauptlagers und der Innenschale des Hauptlagers angeordnet ist, so dass der Leckstrom sich durch das Hauptlager hindurch erstreckt. Diese Vorgehensweise hat den Nachteil, dass die Schmierung des Hauptlagers beeinträchtigt werden kann, wenn mit dem Leckstrom auch Schmiermittel aus dem Hauptlager abgetragen wird.

In einer bevorzugten Ausführungsform ist der Dichtspalt in einer axialen Position zwischen dem Hauptlager und dem Impellerrotor angeordnet. Der Dichtspalt kann berührungsfrei gestaltet sein, so dass es keine über den Dichtspalt hinweg reichende Berührung zwischen der Motorwelle und dem Motorgehäuse gibt. Der Querschnitt des Dichtspalts sollte so klein sein, wie es fertigungstechnisch möglich ist. Ist der Dichtspalt ein Ringspalt zwischen einem kreisförmigen Umfang der Motorwelle und einer kreisförmigen Ausnehmung im Motorgehäuse, so ist die Ausnehmung vorzugsweise konzentrisch zur Motorwelle. Die Querschnittsfläche des Dichtspalts hängt dann vom radialen Abstand zwischen der Motorwelle und dem Motorgehäuses ab. Der größte Abstand zwischen der Motorwelle und dem Motorgehäuse über den Dichtspalt hinweg ist vorzugsweise kleiner als 100 µm, vorzugsweise kleiner als 50 µm, weiter vorzugsweise kleiner als 20 µm.

Der Überdruck in dem Motorgehäuse kann angelegt werden, indem ein gasförmiges Medium in den Innenraum des Motorgehäuses eingeleitet wird. Im Innenraum des Motorgehäuses kann eine Austrittsöffnung ausgebildet sein, aus der das gasförmige Medium austritt.

Die Austrittsöffnung mündet in einen vorderen Hohlraum, der zwischen dem Hauptlager und dem Dichtspalt angeordnet ist. Ausgehend von dem vorderen Hohlraum kann der Leckstrom ohne Umweg direkt zum Dichtspalt gelangen und dort aus dem Innenraum des Motorgehäuses austreten.

Der vordere Hohlraum kann sich über den Umfang der Motorwelle erstrecken. Der vordere Hohlraum kann in einer axialen Position zwischen dem Impellerrotor und dem Hauptlager, insbesondere in einer axialen Position zwischen dem Dichtspalt und dem Hauptlager angeordnet sein. Wenn der Dichtspalt eine größere Ausdehnung in axialer Richtung hat, kann es auch eine axiale Überschneidung zwischen dem vorderen Hohlraum und dem Dichtspalt geben.

Das Verfahren kann so durchgeführt werden, dass der Überdruck in erster Linie in dem vorderen Hohlraum angelegt wird und dass der restliche Innenraum (Hauptraum) des Motorgehäuses von dem vorderen Hohlraum getrennt ist. Es entsteht dann kein wesentlicher Gasstrom aus dem vorderen Hohlraum in den Hauptraum.

Zwischen dem vorderen Hohlraum und dem Hauptraum des Motorgehäuses besteht ein Ausgleichskanal, so dass ein Druckausgleich zwischen dem vorderen Hohlraum und dem Hauptraum stattfinden kann. Der Ausgleichskanal kann sich durch das Hauptlager hindurch erstrecken, was aber den Nachteil haben kann, dass Schmierstoff aus dem Hauptlager abgetragen wird.

Der Ausgleichskanal ist am Hauptlager vorbeigeführt. Das Hauptlager kann eine Abdeckung aufweisen, so dass der Strömungswiderstand durch das Hauptlager hindurch erhöht wird.

Die Außenschale des Hauptlagers kann in einer Lageraufnahme des Motorgehäuses aufgenommen sein. Die Lageraufnahme kann eine Aufnahmefläche aufweisen, an der eine Umfangsfläche des Hauptlagers anliegt. In der Aufnahmefläche kann eine Ausnehmung ausgebildet sein, so dass ein Abschnitt des Ausgleichskanals zwischen der Ausnehmung und der Umfangsfläche eingeschlossen ist.

Der Impeller kann eine Mehrzahl von Ausgleichskanälen zwischen dem vorderen Hohlraum und dem Hauptraum fassen. Die Mehrzahl von Ausgleichskanälen kann über den Umfang des Hauptlagers verteilt sein, insbesondere über den Umfang des Hauptlagers gleichverteilt sein. Beispielsweise kann der Impeller mindestens zwei, vorzugsweise mindestens drei, weiter vorzugsweise mindestens vier Ausgleichskanäle umfassen.

Die Austrittsöffnung für das gasförmige Medium kann auch im Hauptraum des Motorgehäuses münden, wenn das Motorgehäuse so gestaltet ist, dass ein ausreichender Fluss des gasförmigen Mediums von der Austrittsöffnung zu dem Dichtspalt gewährleistet ist.

Wird auch der Hauptraum des Motorgehäuses unter Überdruck gesetzt, so hat dies den Vorteil, dass ein Schutz gegen Eindringen von Verunreinigungen auch dann besteht, wenn das Motorgehäuse abgesehen von dem Dichtspalt weitere Undichtigkeiten aufweist. Das Motorgehäuses kann so gestaltet sein, dass es in regulärem Zustand keine weiteren Undichtigkeiten hat. Es kann also das Motorgehäuse abgesehen von dem Dichtspalt zwischen der Motorwelle und dem Motorgehäuse rundherum abgedichtet sein. Insbesondere können alle Gehäusefugen zwischen zwei Gehäuseteilen des Motorgehäuses mit einer zwischenliegenden Dichtung abgedichtet sein. Undichtigkeiten können entstehen, wenn das Motorgehäuse einen Schaden hat oder eine Dichtung fehlerhaft ist. Entsteht auf diese Weise ein weiterer Durchtrittskanal zwischen dem Innenraum des Gehäuses und dem Außenraum, so wird auch dieser durch den Überdruck im Innenraum des Motorgehäuses vor dem Eindringen von Verunreinigungen geschützt.

Der Impeller kann ein Reservoir eines gasförmigen Mediums umfassen, aus dem der Gasstrom zum Erzeugen des Überdrucks gespeist wird. Das Reservoir kann unter Überdruck stehen, so dass der Gasstrom durch den Überdruck angetrieben werden kann. Der Impeller kann ein Ventil umfassen, um den Gasstrom freizugeben oder zu sperren. Beispielsweise kann das unter Überdruck stehende Reservoir eine gasgefüllte Druckpatrone sein. Das Reservoir kann innerhalb des Motorgehäuses angeordnet sein. Möglich ist auch, dass das Reservoir außerhalb des Impellergehäuses und gegebenenfalls vom dem Impellergehäuse beabstandet angeordnet ist und dass der Gasstrom durch eine Leitung in den Innenraum des Motorgehäuses geleitet wird.

Möglich ist auch, den Gasstrom durch eine Pumpe anzutreiben. Der Impeller kann zu diesem Zweck zusätzlich oder alternativ zu dem Reservoir eine Pumpe, insbesondere eine Membranpumpe umfassen. Mit der Pumpe können Gas aus dem Reservoir und/oder Luft aus der Umgebung angesaugt werden und unter Überdruck in den Innenraum des Motorgehäuses geleitet werden.

Für den Transport des Gasstroms in den Innenraum des Motorgehäuses kann eine Leitung vorgesehen sein, die sich zwischen einer Einlassöffnung und der Auslassöffnung im Inneren des Motorgehäuses erstreckt. Die Pumpe kann in der Leitung zwischen der Einlassöffnung und der Auslassöffnung angeordnet sein, um den Gasstrom durch die Leitung in Richtung der Auslassöffnung anzutreiben. Die Einlassöffnung kann an das Reservoir angeschlossen sein oder frei in die Umgebung münden.

Es kann von Vorteil sein, wenn eine Ansaugöffnung, durch die Luft aus der Umgebung angesaugt wird, von dem Impellergehäuse beabstandet ist. Besteht beispielsweise ein Risiko, dass der Impeller im Einsatz kurzzeitig in Wasser eingetaucht wird, so kann die Einlassöffnung in einer Position angeordnet werden, aus der trotz des eingetauchten Impellers noch Luft angesaugt werden kann. Der Abstand zwischen der Ansaugöffnung und dem Impellergehäuse kann mindestens doppelt so groß sein, vorzugsweise mindestens fünfmal so groß sein, weiter vorzugsweise mindestens zehnmal so groß sein wie der Durchmesser des Impellerrotors. Die Ansaugöffnung kann eine Position haben, die bezogen auf die Richtung der Schwerkraft oberhalb des Impellers angeordnet ist.

Der Impeller kann einen Stator umfassen, der das Motorgehäuse relativ zu dem Impellergehäuse hält. Im Inneren des Stators kann sich eine Leitung erstrecken, durch die der Gasstrom zum Erzeugen des Überdrucks von außerhalb des Impellergehäuses zugeführt wird.

Der Überdruck im Motorgehäuse hängt von den am Dichtungsspalt herrschenden Umgebungsbedingungen ab. Der Überdruck kann beispielsweise um 0,5 mbar bis 20 mbar, vorzugsweise ein mbar bis 10 mbar höher sein als Atmosphärendruck, wenn am Dichtungsspaltsatmosphärendruck anliegt. Der Überdruck kann beispielsweise um 20 mbar bis 500 mbar, vorzugsweise 50 mbar bis 100 mbar höher sein als Atmosphärendruck, wenn der Dichtspalt 0,5 m in Wasser eingetaucht ist.

Der Impeller kann so betrieben werden, dass der Überdruck im Motorgehäuse anliegt, wenn auch der Impeller in Betrieb ist, also der Impellerrotor des Impellers sich dreht. Eine solche Betriebsweise kann beispielsweise zweckmäßig sein, um zu verhindern, dass durch den Impeller aufgewirbelter Staub in den Innenraum des Motorgehäuses eindringen kann. In dieser Betriebsweise kann mit dem Ausschalten des Impellers auch der Überdruck im Innenraum des Motorgehäuses aufgegeben werden. Aufgeben des Überdrucks bedeutet, dass die Pumpe ausgeschaltet wird und/oder die Verbindung zu einem unter Überdruck stehenden Reservoir unterbrochen wird, so dass der Überdruck sich abbaut.

Möglich ist auch, den Überdruck im Motorgehäuse unabhängig vom Betrieb des Impellerrotors zu steuern. Es kann einen Zustand geben, in dem der Impellerrotor in Betrieb ist, während kein Überdruck im Innenraum des Motorgehäuses anliegt. Es kann einen Zustand geben, in dem der Impellerrotor nicht in Betrieb ist, während ein Überdruck im Innenraum des Gehäuses anliegt.

Das Anlegen des Überdrucks im Innenraum des Motorgehäuses kann in Abhängigkeit von den Umgebungsbedingungen gesteuert werden. Es kann ein Sensor vorgesehen sein, der auf Umgebungsbedingungen reagiert und mit dem das Anlegen des Überdrucks angesteuert wird. Beispielweise kann der Sensor auf Wasser reagieren, so dass der Überdruck automatisch angelegt wird, wenn der Impeller in Wasser eingetaucht wird.

Zusätzlich oder alternativ dazu kann das Anlegen des Überdrucks im Innenraum in Abhängigkeit von Parametern innerhalb des Motorgehäuses gesteuert werden. Herrscht beispielsweise eine hohe Luftfeuchtigkeit im Inneren des Motorgehäuses, so kann der Überdruck angelegt werden, um den Innenraum des Motorgehäuses zu trocknen.

Der Impeller kann eine Steuereinheit umfassen, mit dem das Anlegen des Überdrucks gesteuert wird. Das Anliegen des Überdrucks kann in Abhängigkeit von Sensordaten und/oder nach festgelegten Programmen erfolgen. Beispielsweise könnte die Steuereinheit vorgeben, dass der Überdruck nach Deaktivieren des Impellerrotors für eine vorgegebene Zeitspanne aufrechterhalten bleibt, um zu verhindern, dass durch Abkühlen des Motors ein Unterdruck im Motorgehäuse entsteht, durch den Feuchtigkeit angesaugt wird.

Die Erfindung betrifft außerdem einen Impeller mit einem Impellergehäuse und einem in dem Impellergehäuse angeordneten Motorgehäuse. In einem Innenraum des Motorgehäuses ist ein Motor angeordnet, wobei mit dem Motor ein Impellerrotor angetrieben wird, um einen Luftstrom entlang eines zwischen dem Impellergehäuse und dem Motorgehäuse eingeschlossenen Ringraums zu erzeugen. Im Innenraum des Motorgehäuses liegt ein Überdruck an, so dass durch einen zwischen der Motorwelle und dem Motorgehäuse angeordneten Dichtspalt hindurch ein Leckfluss erzeugt wird, der vom Innenraum des Motorgehäuses nach außen gerichtet ist.

Der Impeller kann mit weiteren Merkmalen fortgebildet werden, die im Zusammenhang des erfindungsgemäßen Verfahrens beschrieben sind. Das Verfahren kann mit weiteren Merkmalen fortgebildet werden, die im Zusammenhang des erfindungsgemäßen Impellers beschrieben sind.

Die Erfindung wird nachfolgend unter Bezugnahme auf die beigefügten Zeichnungen anhand vorteilhafter Ausführungsformen beispielhaft beschrieben. Es zeigen:
- Fig. 1:: einen erfindungsgemäßen Impeller;
- Fig. 2:: eine schematische Schnittdarstellung des Impellers aus Fig. 1;
- Fig. 3:: ein Detail des Impellers aus Fig. 1 in vergrößerter Darstellung;
- Fig. 4:: eine Komponente des Impellers aus Fig. 1 in vergrößerter Darstellung;
- Fig. 5:: eine alternative Ausführungsform eines erfindungsgemäßen Impellers;
- Fig. 6:: eine schematische Darstellung eines erfindungsgemäßen Impellers;
- Fig. 7:: die Ansicht gemäß Fig. 6 bei einer alternativen Ausführungsform eines erfindungsgemäßen Impellers.

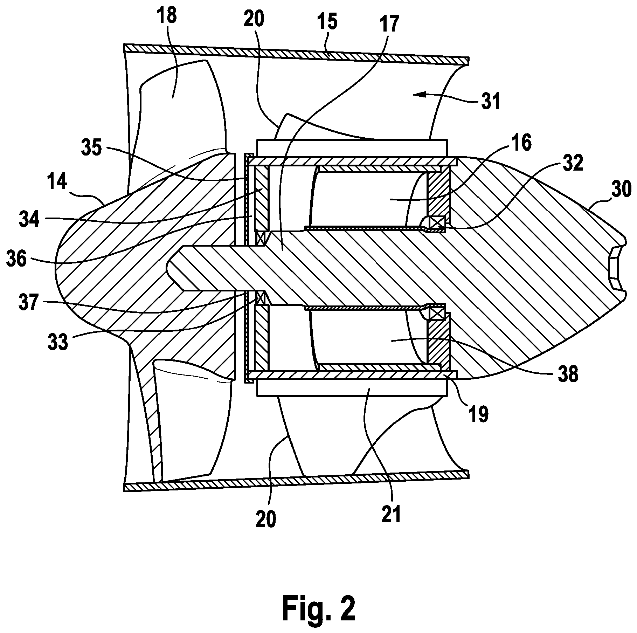

Ein erfindungsgemäßer Impeller umfasst gemäß Fig. 2 einen Impellerrotor 14, der in einem Impellergehäuse 15 angeordnet ist. Ein Elektromotor 16 treibt eine Motorwelle 17 an, so dass der mit der Motorwelle 17 verbundene Impellerrotor 14 in Drehung versetzt wird. Der Motor 16 ist in einem Motorgehäuse 19 gehalten, das im Innenraum des Impellergehäuses 15 angeordnet ist.

In einem Ringraum 31, der radial außerhalb des Motorgehäuses 19 und radial innerhalb des Impellergehäuses 15 eingeschlossen ist, ist eine Mehrzahl von Statoren 20 ausgebildet, mit denen das Motorgehäuse 19 relativ zu dem Impellergehäuse 15 in Position gehalten wird. Der Impellerrotor 14 umfasst eine Mehrzahl von Rotorblättern 21, die an einem stromaufwärts gelegenen Ende des Ringraums 31 umlaufen. Durch die Drehung des Impellerrotors 14 wird ein Luftstrom erzeugt, der sich ausgehend von dem Impellerrotor 14 durch den Ringraum 31 hindurch bis zum entgegengesetzten, stromabwärts gelegenen Ende des Impellers erstreckt. Das stromaufwärts gelegene Ende ist das vordere Ende des Impellers, das stromabwärts gelegene Ende ist das hintere Ende 30 des Impellers.

Das vordere Ende 28 des Impellergehäuses 15 ist weiter stromaufwärts gelegen als das vordere Ende 22 des Motorgehäuses 19. Das Impellergehäuse 15 umgibt den stromaufwärts des Motorgehäuses 19 angeordneten Impellerrotor 14, so dass der Impellerrotor sich im Innenraum des Impellergehäuses 15 dreht. Das hintere Ende des Motorgehäuses 19 ist weiter stromabwärts gelegen als das hintere Ende des Impellergehäuses 15. Das Motorgehäuse 19 umfasst auf diese Weise einen hinteren Abschnitt, der nach hinten über das Impellergehäuse 15 hinausragt.

Auf der Außenseite des Motorgehäuses 19 sind Kühlrippen 21 ausgebildet, die sich in Längsrichtung zwischen dem vorderen Ende 22 und dem hinteren Ende 23 des Motorgehäuses erstrecken. In Fig. 2 sind die Kühlrippen 21 nur schematisch angedeutet. Der Luftstrom in dem Ringraum 31 überstreicht die Oberfläche der Kühlrippen 21 und führt Wärme von Kühlrippen 21 ab. Die im Betrieb des Impellers vom Motor abgegebene Wärme breitet sich durch das Motorgehäuse 19 hindurch zu den Kühlrippen 21 aus und wird dort von dem Luftstrom aufgenommen.

Die Motorwelle 17 ist mit einem ersten Lager 32 und einem zweiten Lager 33 gegenüber dem Motorgehäuse 19 gelagert, wobei das zweite Lager 33 als Hauptlager 33 bezeichnet wird. Das Hauptlager 33 ist in einer Lageraufnahme 34 des Motorgehäuses 19 gehalten. Zwischen dem Hauptlager 33 und einer vorderen Wand 35 des Motorgehäuses 19 ist ein vorderer Hohlraum 36 eingeschlossen. Der zwischen dem ersten Lager 32 und dem Hauptlager 33 eingeschlossene Abschnitt des Motorgehäuses 19 wird als Hauptraum 38 des Motorgehäuses 19 bezeichnet. Die vordere Wand 35 des Motorgehäuses 19 ist nahe an die Motorwelle 17 herangeführt, so dass zwischen dem Motorgehäuse 19 und der Motorwelle 17 ein Dichtspalt 37 eingeschlossen ist.

Wenn im Innenraum des Motorgehäuses 19 ein Überdruck anliegt, so wird ein Gasstrom erzeugt, der durch den Dichtspalt 37 hindurch nach außen führt und ein Eindringen von Verunreinigungen verhindert.

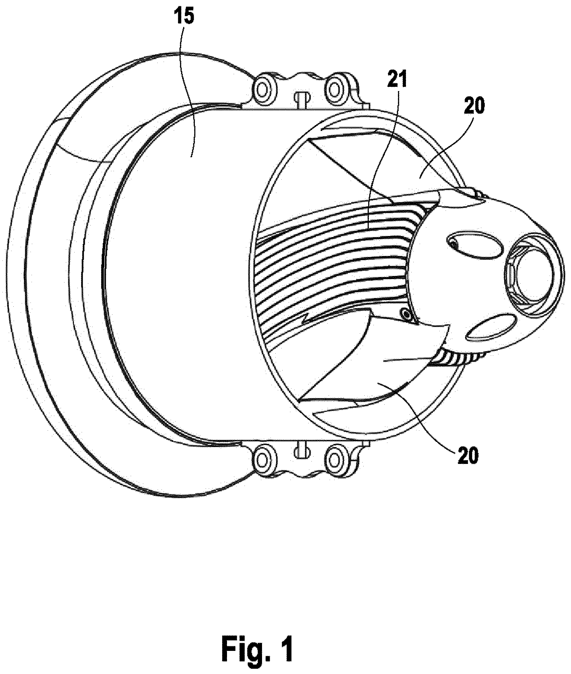

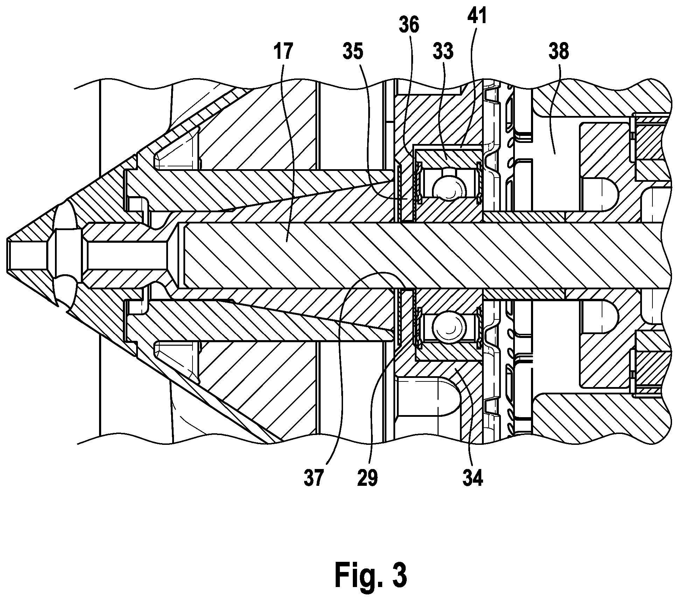

In Fig. 3 ist der Bereich des Hauptlagers 33 des Impellers aus Fig. 1 in einer vergrößerten Schnittdarstellung gezeigt. In dem Motorgehäuse ist eine Öffnung 39 ausgebildet, durch die die Motorwelle 17 hindurchgeführt ist. Der Umfang der Öffnung 39 entspricht dem Umfang des Dichtspalts 37.

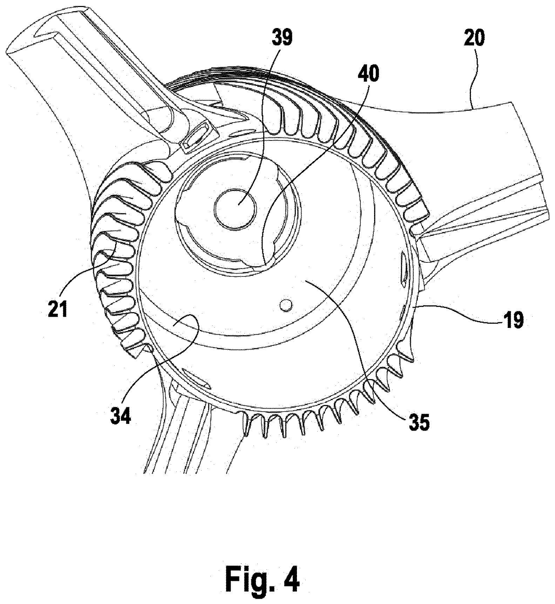

Das Hauptlager 33 ist in einer Lageraufnahme 34 gehalten, die gemäß Fig. 4 in der vorderen Wand 35 des Motorgehäuses 19 angeordnet ist. Die Lageaufnahme 34 hat drei über den Rand verteilte Ausnehmungen 40, so dass innerhalb der Ausnehmungen 40 ein Freiraum zwischen dem Motorgehäuse und dem kreisrunden Umfang des Hauptlagers 33 bleibt. Mit dem Freiraum wird ein Ausgleichskanal 41 geschaffen zwischen dem Hauptraum 38 und dem vorderen Hohlraum 36 des Motorgehäuses 19. Ein im Hauptraum 38 anliegender Überdruck pflanzt sich durch den Ausgleichskanal 41 hindurch fort bis in den vorderen Hohlraum 36, so dass ein kontinuierlicher Luftstrom durch den Dichtspalt 37 hindurch nach außen angetrieben wird. Das Hauptlager ist mit einer Abdeckung 29 versehen, so dass der Luftstrom nicht durch das Hauptlager 33 hindurchtritt.

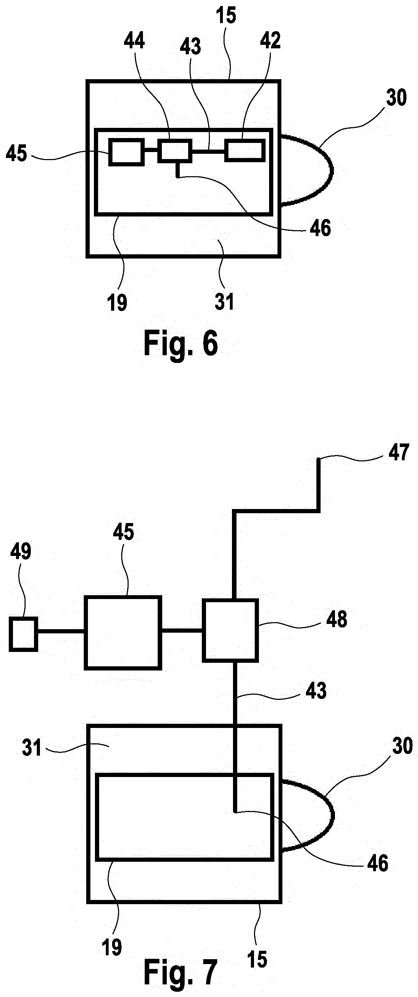

Bei der Ausführungsform gemäß Fig. 6 ist im Innenraum des Motorgehäuses 19 eine unter Überdruck stehende Gaspatrone 42 angeordnet, die über eine Leitung 43 mit einem Ventil 44 verbunden ist. Wenn das Ventil 44 im geöffneten Zustand ist, tritt das Gas aus der Gaspatrone 42 über eine Austrittsöffnung 46 der Leitung 43 aus und erzeugt den Überdruck im Innenraum des Motorgehäuses 19. Eine Steuereinheit 45 steuert das Ventil 44 an, so dass abhängig vom Betriebszustand des Impellers das Ventil 44 geöffnet bzw. geschlossen wird.

In Fig. 7 ist die Leitung 43 zum Zuführen des Gasstroms durch den Ringraum 31 hindurch nach außen geführt bis zu einer Ansaugöffnung 47, die frei in der Umgebung mündet. Mit einer Membranpumpe 48 wird an der Ansaugöffnung 47 Luft angesaugt und durch die Leitung 43 zur Austrittsöffnung 46 gefördert, um einen Überdruck im Innenraum des Motorgehäuses 19 zu erzeugen. Die Steuereinheit 44 steuert die Membranpumpe 48 in Abhängigkeit von einem Sensor 49 an, der Messwerte über Umgebungsbedingungen liefert.

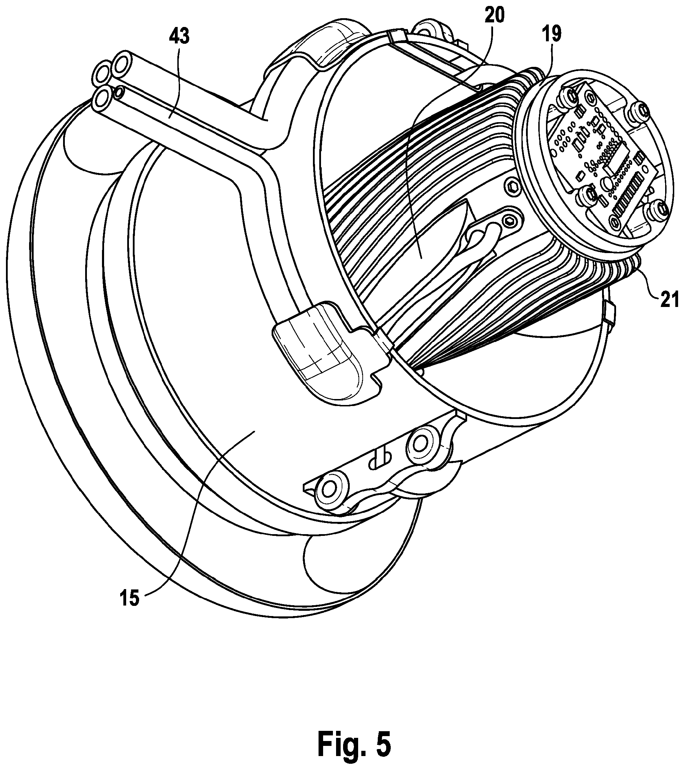

Gemäß Fig. 5 ist die Leitung 43 im Bereich des Ringraums 31 durch den Innenraum eines Stators 20 hindurch geführt. Die Leitung 43 kann auf diese Weise den Ringraum 31 passieren, ohne den mit dem Impellerrotor 14 erzeugten Luftstrom zu beeinträchtigen.

## Patentansprüche

1. Verfahren zum Betreiben eines Impellers, bei dem der Impeller ein Impellergehäuse (15), ein im Impellergehäuse angeordnetes Motorgehäuse (19) und ein Hauptlager (33) umfasst, wobei in einem Innenraum (36, 38) des Motorgehäuses (19) ein Motor (16) angeordnet ist, wobei mit dem Motor (16) ein Impellerrotor (14) angetrieben wird, um einen Luftstrom entlang eines zwischen dem Impellergehäuse (15) und dem Motorgehäuse (19) eingeschlossenen Ringraums (31) zu erzeugen, wobei das Motorgehäuse (19) einen vorderen Hohlraum (36) und einen Hauptraum (38) umfasst, wobei das Hauptlager (33) zwischen dem Motor (16) und dem Impellerrotor (14) und der vordere Hohlraum (36) zwischen dem Hauptlager (33) und dem Impellerrotor (14) angeordnet sind, wobei zwischen dem vorderen Hohlraum (36) und dem Hauptraum (38) ein am Hauptlager (33) vorbeigeführter Ausgleichskanal (41) ausgebildet ist, wobei im Innenraum (36, 38) des Motorgehäuses (19) ein Überdruck angelegt wird, so dass durch einen zwischen der Motorwelle (17) und dem Motorgehäuse (19) angeordneten Dichtspalt (37) hindurch ein Leckfluss erzeugt wird, der vom Innenraum (36, 38) des Motorgehäuses (19) nach außen gerichtet ist, und wobei der Dichtspalt (37) zwischen dem Hauptlager (33) und dem Impellerrotor (14) angeordnet ist.

2. Verfahren nach Anspruch 1, **dadurch gekennzeichnet, dass** der größte Abstand zwischen der Motorwelle (17) und dem Motorgehäuse (19) über den Dichtspalt (37) hinweg kleiner ist als 100 µm, vorzugsweise kleiner ist als 50 µm, weiter vorzugsweise kleiner ist als 20 µm.

3. Verfahren nach Anspruch 1 oder 2, **dadurch gekennzeichnet, dass** das Hauptlager (33) in einer Lageraufnahme (34) des Motorgehäuses (19) aufgenommen ist, wobei in der Lageraufnahme (34) eine Ausnehmung (40) ausgebildet ist, so dass ein Abschnitt des Ausgleichskanals (41) zwischen der Ausnehmung (40) und dem Hauptlager (33) eingeschlossen ist.

4. Verfahren nach einem der Ansprüche 1 bis 3, **dadurch gekennzeichnet, dass** das Hauptlager (33) eine Abdeckung (29) aufweist, so dass der Strömungswiderstand durch das Hauptlager (33) hindurch erhöht wird.

5. Verfahren nach einem der Ansprüche 1 bis 4, **dadurch gekennzeichnet, dass** im Innenraum (36, 38) des Motorgehäuses (19) eine Austrittsöffnung (46) ausgebildet ist, aus der zum Erzeugen des Überdrucks ein gasförmiges Medium austritt.

6. Verfahren nach einem der Ansprüche 1 bis 5, **dadurch gekennzeichnet, dass** der Impeller ein Reservoir (42) eines gasförmigen Mediums umfasst, aus dem der Gasstrom zum Erzeugen des Überdrucks gespeist wird.

7. Verfahren nach einem der Ansprüche 1 bis 6, **dadurch gekennzeichnet, dass** der der Gasstrom zum Erzeugen des Überdrucks mit einer Pumpe (48) angetrieben wird.

8. Verfahren nach Anspruch 7, **dadurch gekennzeichnet, dass** zum Erzeugen des Gasstroms Luft aus der Umgebung durch eine Ansaugöffnung (47) angesaugt wird und dass der Abstand zwischen der Ansaugöffnung (47) und dem Impellergehäuse (15) mindestens doppelt so groß ist, vorzugsweise mindestens fünfmal so groß ist, weiter vorzugsweise mindestens zehnmal so groß ist wie der Durchmesser des Impellerrotors (14).

9. Verfahren nach einem der Ansprüche 1 bis 8, **dadurch gekennzeichnet, dass** der Impeller einen Stator (20) umfasst, der das Motorgehäuse (19) relativ zu dem Impellergehäuse (15) hält und dass sich im Inneren des Stators (20) eine Leitung (43) erstreckt, durch die der Gasstrom zum Erzeugen des Überdrucks von außerhalb des Impellergehäuses (15) zugeführt wird.

10. Impeller mit einem Impellergehäuse (15), einem in dem Impellergehäuse angeordneten Motorgehäuse (19) und einem Hauptlager (33), wobei in einem Innenraum (36, 38) des Motorgehäuses (19) ein Motor (16) angeordnet ist, wobei mit dem Motor (16) ein Impellerrotor (14) angetrieben wird, um einen Luftstrom entlang eines zwischen dem Impellergehäuse (15) und dem Motorgehäuse (19) eingeschlossenen Ringraums (31) zu erzeugen, wobei das Motorgehäuse (19) einen vorderen Hohlraum (36) und einen Hauptraum (38) umfasst, wobei das Hauptlager (33) zwischen dem Motor (16) und dem Impellerrotor (14) und der vordere Hohlraum (36) zwischen dem Hauptlager (33) und dem Impellerrotor (14) angeordnet sind, wobei zwischen dem vorderen Hohlraum (36) und dem Hauptraum (38) ein am Hauptlager (33) vorbeigeführter Ausgleichskanal (41) ausgebildet ist, wobei im Innenraum (36, 38) des Motorgehäuses (19) ein Überdruck anliegt, so dass durch einen zwischen der Motorwelle (17) und dem Motorgehäuse (19) angeordneten Dichtspalt (37) hindurch ein Leckfluss erzeugt wird, der vom Innenraum (36, 38) des Motorgehäuses (19) nach außen gerichtet ist, und wobei der Dichtspalt (37) zwischen dem Hauptlager (33) und dem Impellerrotor (14) angeordnet ist.

## Claims

1. Method for operating an impeller, in the case of which the impeller comprises an impeller housing (15), a motor housing (19) arranged in the impeller housing and a main bearing (33), wherein a motor (16) is arranged in an interior space (36, 38) of the motor housing (19), wherein the motor (16) is used to drive an impeller rotor (14) in order to generate an air stream along an annular space (31) formed between the impeller housing (15) and the motor housing (19), wherein the motor housing (19) comprises a front cavity (36) and a main space (38), wherein the main bearing (33) is arranged between the motor (16) and the impeller rotor (14), and the front cavity (36) is arranged between the main bearing (33) and the impeller rotor (14), wherein a compensation channel (41) bypassing the main bearing (33) is formed between the front cavity (36) and the main space (38), wherein an excess pressure is applied in the interior space (36, 38) of the motor housing (19), with the result that a leakage flow aligned from the interior space (36, 38) of the motor housing (19) outwards is generated through a sealing gap (37) arranged between the motor shaft (17) and the motor housing (19), and wherein the sealing gap (37) is arranged between the main bearing (33) and the impeller rotor (14).

2. Method according to Claim 1, **characterized in that** the greatest distance between the motor shaft (17) and the motor housing (19) across the sealing gap (37) is less than 100 µm, preferably less than 50 µm, and more preferably less than 20 µm.

3. Method according to Claim 1 or 2, **characterized in that** the main bearing (33) is received in a bearing receptacle (34) of the motor housing (19), wherein a recess (40) is formed in the bearing receptacle (34), with the result that a portion of the compensation channel (41) is formed between the recess (40) and the main bearing (33).

4. Method according to one of Claims 1 to 3, **characterized in that** the main bearing (33) has a cover (29), with the result that the flow resistance is increased through the main bearing (33).

5. Method according to one of Claims 1 to 4, **characterized in that** an outlet opening (46), from which a gaseous medium exits to generate the excess pressure, is formed in the interior space (36, 38) of the motor housing (19).

6. Method according to one of Claims 1 to 5, **characterized in that** the impeller comprises a reservoir (42) of a gaseous medium, from which the gas stream is supplied to generate the excess pressure.

7. Method according to one of Claims 1 to 6, **characterized in that** the gas stream for generating the excess pressure is impelled by a pump (48).

8. Method according to Claim 7, **characterized in that**, to generate the gas stream, air is drawn in from the surroundings through an intake opening (47), and **in that** the distance between the intake opening (47) and the impeller housing (15) is at least twice, preferably at least five times, more preferably at least ten times the diameter of the impeller rotor (14).

9. Method according to one of Claims 1 to 8, **characterized in that** the impeller comprises a stator (20) which retains the motor housing (19) relative to the impeller housing (15), and **in that** a line (43) through which the gas stream for generating the excess pressure is fed from outside the impeller housing (15) extends inside the stator (20).

10. Impeller comprising an impeller housing (15), a motor housing (19) arranged in the impeller housing and a main bearing (33), wherein a motor (16) is arranged in an interior space (36, 38) of the motor housing (19), wherein the motor (16) is used to drive an impeller rotor (14) in order to generate an air stream along an annular space (31) formed between the impeller housing (15) and the motor housing (19), wherein the motor housing (19) comprises a front cavity (36) and a main space (38), wherein the main bearing (33) is arranged between the motor (16) and the impeller rotor (14), and the front cavity (36) is arranged between the main bearing (33) and the impeller rotor (14), wherein a compensation channel (41) bypassing the main bearing (33) is formed between the front cavity (36) and the main space (38), wherein an excess pressure is applied in the interior space (36, 38) of the motor housing (19), with the result that a leakage flow aligned from the interior space (36, 38) of the motor housing (19) outwards is generated through a sealing gap (37) arranged between the motor shaft (17) and the motor housing (19), and wherein the sealing gap (37) is arranged between the main bearing (33) and the impeller rotor (14).

## Revendications

1. Procédé de fonctionnement d'une roue à aubes, dans lequel la roue à aubes comprend un carter de roue à aubes (15), un carter de moteur (19) disposé dans le carter de roue à aubes et un palier principal (33), un moteur (16) étant disposé dans un espace intérieur (36, 38) du carter de moteur (19), un rotor de roue à aubes (14) étant entraîné par le moteur (16) pour générer un flux d'air le long d'un espace annulaire (31) délimité entre le carter de roue à aubes (15) et le carter de moteur (19), le carter de moteur (19) comprenant une cavité avant (36) et un espace principal (38), le palier principal (33) étant disposé entre le moteur (16) et le rotor de roue à aubes (14) et la cavité avant (36) étant disposée entre le palier principal (33) et le rotor de roue à aubes (14), un canal de compensation (41) contournant le palier principal (33) étant formé entre la cavité avant (36) et l'espace principal (38), une surpression étant appliquée dans l'espace intérieur (36, 38) du carter de moteur (19) de manière à générer à travers un interstice d'étanchéité (37) disposée entre l'arbre de moteur (17) et le carter de moteur (19) un flux de fuite qui est dirigé vers l'extérieur depuis l'espace intérieur (36, 38) du carter de moteur (19), et l'interstice d'étanchéité (37) étant disposé entre le palier principal (33) et le rotor de roue à aubes (14).

2. Procédé selon la revendication 1, **caractérisé en ce que** la plus grande distance entre l'arbre de moteur (17) et le carter de moteur (19) à travers l'interstice d'étanchéité (37) est inférieure à 100 µm, de préférence inférieure à 50 µm, de préférence encore inférieure à 20 µm.

3. Procédé selon la revendication 1 ou 2, **caractérisé en ce que** le palier principal (33) est reçu dans un logement de palier (34) du carter de moteur (19), un évidement (40) étant formé dans le logement de palier (34), de telle sorte qu'une section du canal de compensation (41) est délimitée entre l'évidement (40) et le palier principal (33).

4. Procédé selon l'une des revendications 1 à 3, **caractérisé en ce que** le palier principal (33) comporte un couvercle (29), de telle sorte que la résistance à l'écoulement est augmentée à travers le palier principal (33).

5. Procédé selon l'une des revendications 1 à 4, **caractérisé en ce qu'**est formée dans l'espace intérieur (36, 38) du carter de moteur (19) une ouverture de sortie (46), de laquelle s'échappe un fluide gazeux pour générer la surpression.

6. Procédé selon l'une des revendications 1 à 5, **caractérisé en ce que** la roue à aubes comprend un réservoir (42) d'un milieu gazeux à partir duquel le flux gazeux est fourni pour générer la surpression.

7. Procédé selon l'une des revendications 1 à 6, **caractérisé en ce que** le flux de gaz est entraîné par une pompe (48) pour générer la surpression.

8. Procédé selon la revendication 7, **caractérisé en ce que** pour générer le flux gazeux, de l'air provenant de l'environnement est aspiré à travers une ouverture d'aspiration (47) et que la distance entre l'ouverture d'aspiration (47) et le carter de roue à aubes (15) est au moins deux fois plus grande, de préférence au moins cinq fois plus grande, de façon plus particulièrement préférée, au moins dix fois plus grande que le diamètre du rotor de roue à aubes (14).

9. Procédé selon l'une des revendications 1 à 8, **caractérisé en ce que** la roue à aubes comprend un stator (20) qui maintient le carter de moteur (19) par rapport au carter de roue à aubes (15) et **en ce qu'**une conduite (43) s'étend à l'intérieur du stator (20), à travers laquelle le flux de gaz est amené depuis l'extérieur du carter de roue à aubes (15) pour générer la surpression.

10. Roue à aubes comportant un carter de roue à aubes (15), un carter de moteur (19) disposé dans le carter de roue à aubes et un palier principal (33), un moteur (16) étant disposé dans un espace intérieur (36, 38) du carter de moteur (19), un rotor de roue à aubes (14) étant entraîné par le moteur (16) pour générer un flux d'air le long d'un espace annulaire (31) délimité entre le carter de roue à aubes (15) et le carter de moteur (19), le carter de moteur (19) comprenant une cavité avant (36) et un espace principal (38), le palier principal (33) étant disposé entre le moteur (16) et le rotor de roue à aubes (14) et la cavité avant (36) étant disposée entre le palier principal (33) et le rotor de roue à aubes (14), un canal de compensation (41) contournant le palier principal (33) étant formé entre la cavité avant (36) et la chambre principale (38), une surpression étant appliquée dans l'espace intérieur (36, 38) du carter de moteur (19) de manière à générer un écoulement de fuite à travers un interstice d'étanchéité (37) disposé entre l'arbre de moteur (17) et le carter de moteur (19), qui est dirigé vers l'extérieur depuis l'espace intérieur (36, 38) du carter de moteur (19), et l'interstice d'étanchéité (37) étant disposé entre le palier principal (33) et le rotor de roue à aubes (14).
